# EUROPEAN PATENT APPLICATION

(11) **EP 1 705 643 A1**
(43) Date of publication of application: **27.09.2006**
(21) Application number: 04788144.6
(22) Date of filing: 17.09.2004
(51) Int. Cl.: G10K 11/16

(54) **SOUND ABSORBING STRUCTURE**

(30) Priority: 30.10.2003 JP 2003370734
(71) Applicant: Kabushiki Kaisha Kobe Seiko Sho (Kobe Steel, Ltd.), Kobe-shi, Hyogo 651-8585 (JP)
(72) Inventor: YAMAGIWA, Ichiro, KABUSHIKI KAISHA KOBE SEIKO SHO, Kobe-shi, Hyogo 6512271 (JP); YAMAGUCHI, Zenzo, KABUSHIKI KAISHA KOBE SEIKO SHO, Kobe-shi, Hyogo 6512271 (JP); TANAKA, Toshimitsu KABUSHIKI KAISHA KOBE SEIKO SHO, Kobe-shi, Hyogo 6512271 (JP); UEDA, Hiroki, KABUSHIKI KAISHA KOBE SEIKO SHO, Kobe-shi, Hyogo 6512271 (JP)
(74) Representative: Brookes Batchellor LLP
(86) International application number: PCT/JP2004/014032
(87) International publication number: WO 2005/043509

(57) **Abstract**

A sound absorbing structure utilizes the vibration of a plate-like body (1), and includes the plate-like body (1), a vibration damping member (2) provided on at least one surface of the plate-like body (1), and an installation portion (3) provided at an opposite side of the vibration damping member against the plate-like body (1).

## Description

### TECHNOLOGICAL FIELD

The present invention relates to a sound absorbing structure for reducing sounds from a noise source.

### BACKGROUND ART

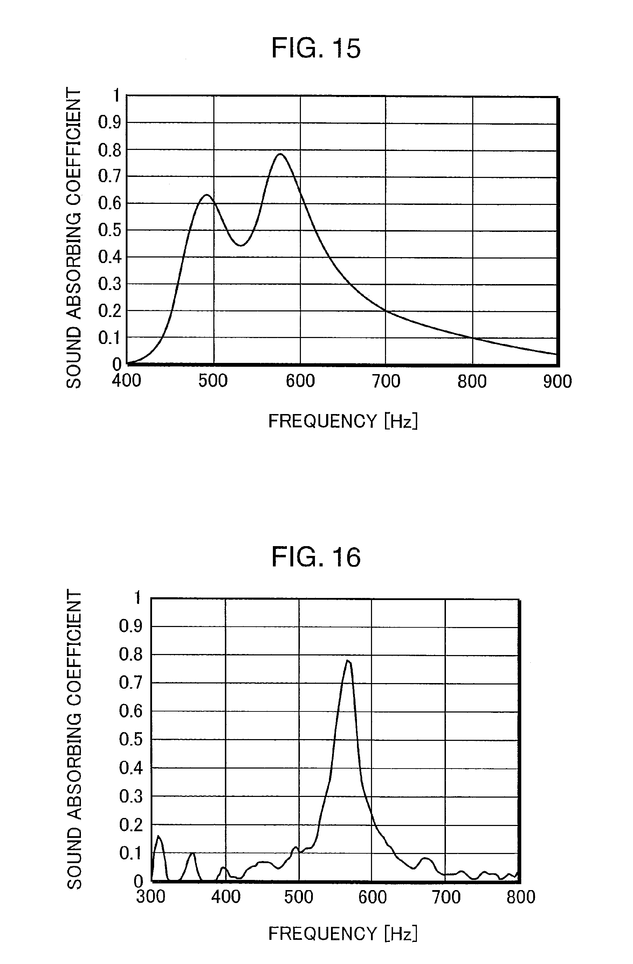

A sound absorbing structure disclosed, for example, in Japanese Unexamined Patent Publication No. H06-83365 or H03-293409 utilizes a sound absorbing action brought about by thin-film vibration. Generally, a sound absorbing characteristic by the thin-film vibration is such that a sound absorbing coefficient is high only at a frequency restricted by a thin-film natural frequency as shown in FIG. 16 with the periphery of the thin film supported.

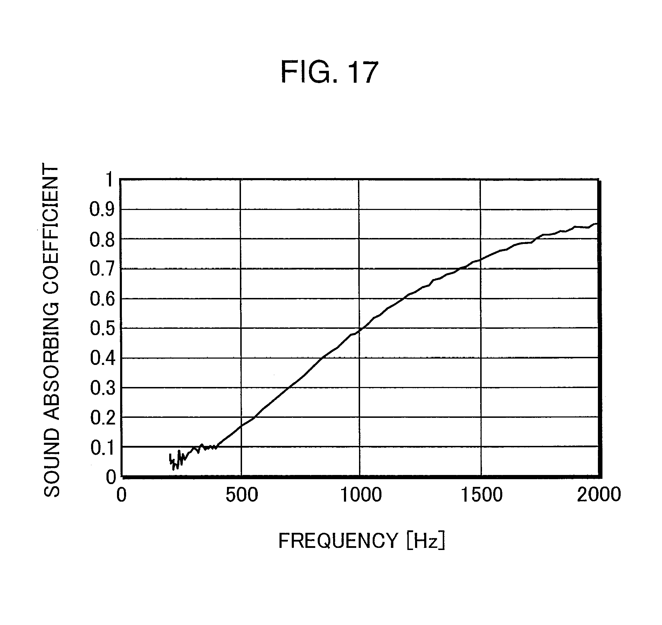

On the other hand, the sound absorbing performance of a porous material such as glass wool has a characteristic as shown in FIG. 17. Accordingly, a porous sound absorbing body such as glass wool is used for a noise source having a wide frequency characteristic. However, if the noise source lies in a low frequency range, the sound absorption by the glass wool is not efficient because of a necessity to increase the bulk density of the glass wool more than necessary.

In view of the above-mentioned problems, an object of the present invention is to provide a sound absorbing structure which can realize a high sound absorbing performance in a wide frequency range and realize a sound absorbing performance at a desired frequency.

### DISCLOSURE OF THE INVENTION

In order to accomplish the above object, a sound absorbing structure according to the present invention (claim 1) utilizes the vibration of a plate-like body and comprises the plate-like body; a vibration damping member provided at least on one surface of the plate-like body; and an installation portion provided at an opposite side of the vibration damping member against the plate-like body.

A sound absorbing structure according to the present invention (claim 2) utilizes the vibration of a plate-like body and comprises the plate-like body; vibration damping members provided on the opposite surfaces of the plate-like body; and an installation portion provided at an opposite side of at least one vibration damping member against the plate-like body.

A sound absorbing structure according to the present invention (claim 3) utilizes the vibration of a plate-like body and comprises the plate-like body; an installation portion provided at least on one surface of the plate-like body; and vibration damping member(s) provided on an opposite surface of the plate-like body against the installation portion and/or on the same surface of the plate-like body as the installation portion.

A sound absorbing structure according to the present invention (claim 4) utilizes the vibration of a plate-like body and comprises the plate-like body; an installation portion provided at least on one surface of the plate-like body; a vibration damping member provided on an opposite surface of the plate-like body against the installation portion; and a constraining member provided at an opposite side of the vibration damping member against the plate-like body.

A sound absorbing structure according to the present invention (claim 5) is characterized in that the vibration damping member is made of an elastic body or a viscoelastic body in the sound absorbing structure according to any one of claims 1 to 4.

A sound absorbing structure according the present invention (claim 6) is characterized in that the vibration damping member is sheet-shaped in the sound absorbing structure according to any one of claims 1 to 4.

A sound absorbing structure according the present invention (claim 7) is characterized in that the vibration damping member is line-shaped or strip-shaped in the sound absorbing structure according to any one of claims 1 to 4.

A sound absorbing structure according the present invention (claim 8) is characterized in that the vibration damping member is made of an elastic body or a viscoelastic body and is lattice-shaped in the sound absorbing structure according to claim 1.

A sound absorbing structure according the present invention (claim 9) is characterized in that the vibration damping members are made of elastic bodies or viscoelastic bodies and at least one of the vibration damping members provided on the opposite surfaces of the plate-like body is lattice-shaped in the sound absorbing structure according to claim 2.

A sound absorbing structure according the present invention (claim 10) is characterized in that the installation portion is lattice-shaped and has the same shape as the lattice-shaped vibration damping member in the sound absorbing structure according to claim 8.

A sound absorbing structure according the present invention (claim 11) is characterized in that the lattice of the lattice-shaped vibration damping member includes a plurality of square and/or rectangular shapes having different sizes in the sound absorbing structure according to claim 8.

A sound absorbing structure according the present invention (claim 12) is characterized in that the vibration damping members provided on the opposite surfaces of the plate-like body are lattice-shaped in the sound absorbing structure according to claim 9.

A sound absorbing structure according the present invention (claim 13) is characterized in that the installation portion is lattice-shaped and has the same shape as the lattice-shaped vibration damping member in the sound absorbing structure according to claim 9.

A sound absorbing structure according the present invention (claim 14) is characterized in that the lattice of the lattice-shaped vibration damping member includes a plurality of square and/or rectangular shapes having different sizes in the sound absorbing structure according to claim 9.

A sound absorbing structure according the present invention (claim 15) is characterized in that the plate-like body includes a plurality of through holes in the sound absorbing structure according to any one of claims 1 to 4.

A sound absorbing structure according the present invention (claim 16) is characterized in that the plate-like body and the vibration damping member(s) include a plurality of through holes in the sound absorbing structure according to claim 15.

A sound absorbing structure according the present invention (claim 17) is characterized in that one or a plurality of other plate-like body(s) is/are arranged at an opposite side of the plate-like body against the installation portion in the sound absorbing structure according to any one of claims 1 to 4.

A sound absorbing structure according the present invention (claim 18) is characterized in that an elastic body or a viscoelastic body is arranged between the plurality of other plate-like bodies in the sound absorbing structure according to claim 17.

A sound absorbing structure according the present invention (claim 19) is characterized in that the installation portion is another plate-like body provided with projections in the sound absorbing structure according to claim 1 or 2.

A sound absorbing structure according the present invention (claim 20) is characterized in that the plate-like body and a plurality of installation portions are integrally formed, and the vibration damping members are arranged on the plate-like body between the plurality of installation portions in the sound absorbing structure according to claim 3 or 4.

With the sound absorbing structures according to the present invention, the sound absorbing performance can be improved in a wide frequency range by suitably setting the vibration damping property of the plate-like body in a sound absorbing mechanism through the active vibration of the plate-like body. Further, by providing the plate-like body with the through holes, the sound absorbing performance is improved by a viscous damping effect of air passing through the through holes caused by the vibration of the plate-like body. Furthermore, the sound absorbing performance can be improved in a wider frequency range by combining a plurality of plate-like bodies.

As a result, according to the inventive sound absorbing structures, a high sound absorbing performance can be realized in a wide frequency range and also at a desired frequency.

### BRIEF DESCRIPTION OF THE DRAWINGS

FIGS. 1A to 1C are diagrams showing a sound absorbing structure according to a first embodiment of the invention, wherein FIG. 1A is a front view in section, FIG. 1B is a top view and FIG. 1C is a front view in section in the case where installation portions are mounted on a plate member instead of on a wall of FIG. 1A;
FIGS. 2A and 2B are front views in section showing sound absorbing structures according to a second embodiment of the present invention, wherein FIG. 2A shows a case where a vibration damping member is provided on the plate-like body of FIG. 1 at a side opposite to the installation portions and FIG. 2B shows a case where a plate-like body is further provided on the vibration damping member of FIG. 2A;
FIGS. 3A and 3B are a front view in section and a top view showing a sound absorbing structure according to a third embodiment of the invention;
FIGS. 4A and 4B are a front view in section and a top view showing a sound absorbing structure according to a fourth embodiment of the invention;

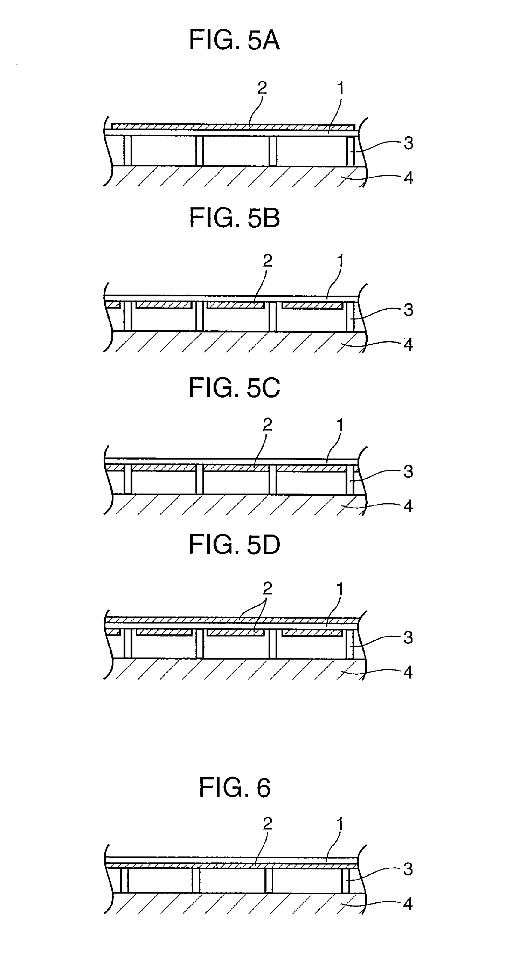

FIGS. 5A to 5D are front views in section showing sound absorbing structures according to a fifth embodiment of the present invention, wherein FIG. 5A shows a case where a vibration damping member is adhered to an opposite surface of a plate-like body against installation portions, FIG. 5B shows a case where vibration damping members are adhered to surface sections of the plate-like body between the installation portions while being distanced from the installation portions, FIG. 5C shows a case where vibration damping members are adhered to the surface sections of the plate-like body between the installation portions while defining no clearances to the installation portions, and FIG. 5D shows a case where vibration damping members are adhered to the opposite surface of the plate-like body against the installation portions and to the surface sections of the plate-like body between the installation portions;
FIG. 6 is a front view in section showing a sound absorbing structure according to a sixth embodiment of the invention;
FIGS. 7A to 7C are front views in section showing sound absorbing structures according to a seventh embodiment of the present invention, wherein FIG. 7A shows a case where one layer of a vibration damping member and a constraining plate is provided, FIG. 7B shows a case where two or more layers of vibration damping members and constraining plates are superimposed, and FIG. 7C shows a case where one vibration damping member is further superimposed on the other surface of the constraining plate;
FIG. 8 is a front view in section showing a sound absorbing structure according to an eighth embodiment of the invention;
FIG. 9 is a front view in section showing a sound absorbing structure according to a ninth embodiment of the invention;
FIG. 10 is a front view in section showing a sound absorbing structure according to a tenth embodiment of the invention;
FIG. 11 is a front view in section showing a sound absorbing structure according to an eleventh embodiment of the invention;
FIG. 12 is a front view in section showing a sound absorbing structure according to a twelfth embodiment of the invention;
FIGS. 13A and 13B are front views in section showing sound absorbing structures according to a thirteenth embodiment of the invention, wherein FIG. 13A shows a case where vibration damping members are adhered to surface sections of a plate-like body between installation portions and FIG. 13B shows a case where a vibration damping member is adhered to an opposite surface of the plate-like body against the installation portions;
FIG. 14 is a graphs showing sound absorbing coefficient in relation to 1/3 octave band center frequency while comparing examples of the invention with a prior art example;
FIG. 15 is a graph showing the sound absorbing coefficient of the embodiment shown in FIG. 4 in relation to frequency;
FIG. 16 is a graph showing a sound absorbing characteristic by conventional plate vibration; and
FIG. 17 is a graph showing a sound absorbing performance of a conventionally used porous material such as glass wool.

### BEST MODES FOR EMBODYING THE INVENTION

Hereinafter, embodiments of the present invention are described with reference to the drawings.

### (a) First Embodiment

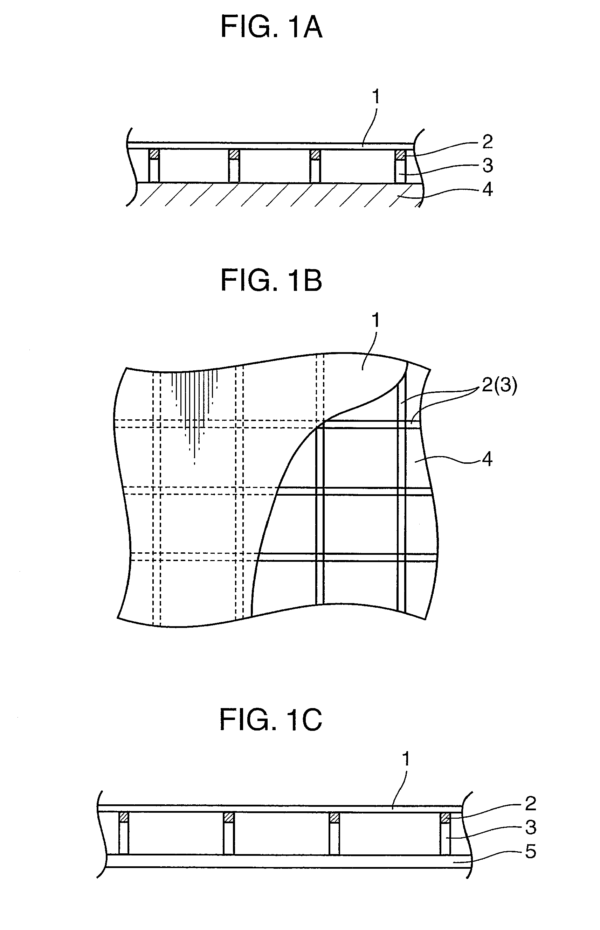

In a sound absorbing structure of a first embodiment shown in FIGS. 1, a plate-like body 1 is fixed to installation portions (ribs) 3 via vibration damping members 2 and the installation portions 3 are fixed to a wall 4. By interposing the vibration damping members 2 between the plate-like body 1 and the installation portions 3 in this way, a vibration damping property is added to the plate-like body 1, which can thereby improve a sound absorbing performance in a wide frequency range. This sound absorbing principle is described in detail below.

Upon the presence of a noise, the plate-like body 1 minutely vibrates itself and largely vibrates particularly at a natural frequency. At this time, the installation portions 3 or the vibration damping members 2 mounted on the plate-like body 1 are deformed to convert vibration energy into a thermal energy, thereby absorbing a sound energy. In order to obtain this effect, boundary conditions around the vibrating plate-like body 1 are adjusted. In other words, the natural frequency is adjusted to the frequency of a sound to be deafened, and the plate-like body 1 and the vibration damping members 2 for applying damping are so designed as to effectively damp or attenuate the energy.

A most basic mode includes one lattice of the installation portions 3 shown in FIGS. 1A and 1B. Specifically, the installation portions 3 are so mounted near one plate-like body 1 via the vibration damping members (anti-vibration members) 2 as to have a frame-like shape, and the frame-shaped installation portions 3 are directly fixed to the wall 4. Then, the entire plate-like body 1 vibrates with a substantially center thereof displaced to a largest extent as if a string would vibrate when viewed sideways. This vibration causes the vibration damping members 2 to extend and contract between the wall 4 and the plate-like body 1, whereby the energy of this vibration can be converted into a thermal energy, resulting in the attenuation of the vibration. In this way, noise (aerial vibration) can be reduced. However, the frame shape of the installation portions 3 is not limited to the lattice shape, and may be a circular, triangular or hexagonal frame shape.

Although the surface facing the plate-like body 1 is the wall 4 in the first embodiment, it may be a plate member 5 as shown in FIG. 1C. This also holds for all the embodiments described below. In such a case, the plate member 5 preferably has rigidity equal to or higher than that of the plate-like body 1.

In the first embodiment, metals such as aluminum, resins, lumbers, and other materials that can be formed into plates can be counted as materials for the plate-like body 1 and the plate member 5. Further, elastic bodies or viscoelastic bodies can be used as the vibration damping members 2. Specific examples thereof include foamed bodies, anti-vibration members, and adhesives, and the material for the vibration damping members 2 is rubber or a resin material. These also hold for all the embodiments described below.

### (b) Second Embodiment

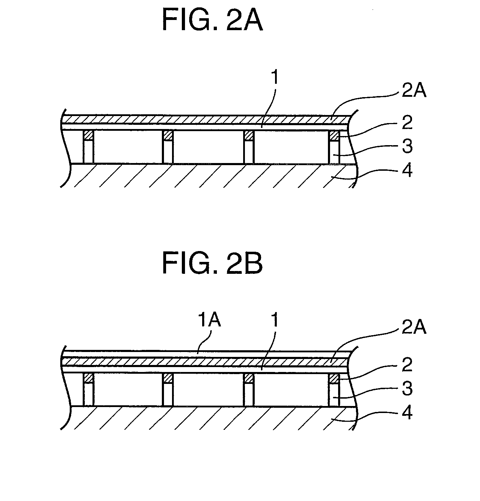

Sound absorbing structures of a second embodiment shown in FIGS. 2 are a structure in which a vibration damping member 2A is layered at an opposite side of the plate-like body 1 of the sound absorbing structure shown in FIG. 1 against the installation portions 3 (FIG. 2A) and a structure in which a plate-like body 1A is superimposed on the layered vibration damping member 2A (FIG. 2B). By provided the vibration damping member 2A at the opposite side of the plate-like body 1 against the installation portions 3 and superimposing the plate-like body 1A on the vibration damping member 2A in this way, a vibration damping property is added to the plate-like body 1. Therefore, the vibration damping property can be effectively improved to improve a sound absorbing performance in a wide frequency range.

### (c) Third Embodiment

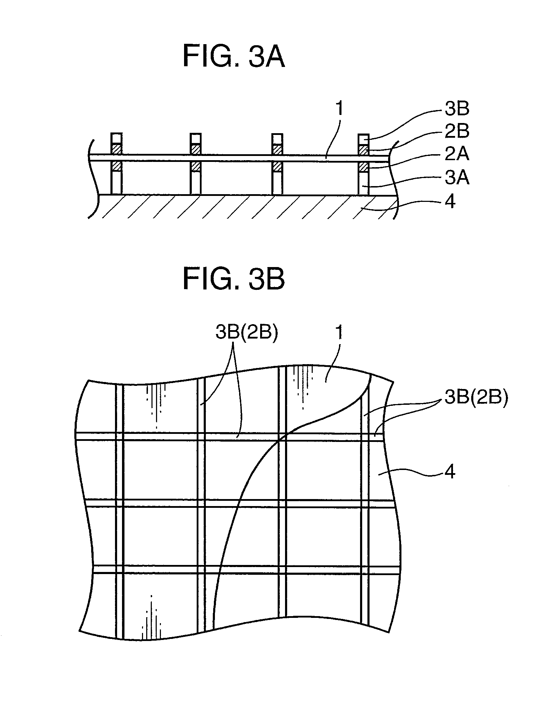

In a sound absorbing structure of a third embodiment shown in FIGS. 3, a plate-like body 1 has the opposite surfaces thereof fixed to installation portions 3A, 3B via vibration damping members 2A, 2B, and the installation portions 3A at one side are fixed to a wall 4. By interposing the vibration damping members 2A, 2B between the plate-like body 1 and the installation portions 3A, 3B in this way, a vibration damping property is added to the plate-like body 1. Therefore, the vibration damping property can be effectively improved to improve a sound absorbing performance in a wide frequency range.

### (d) Fourth Embodiment

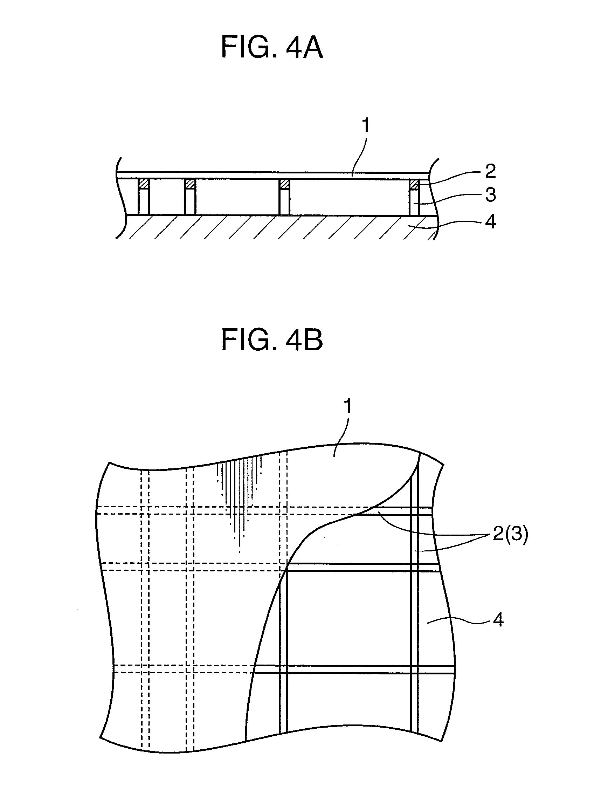

In a sound absorbing structure of a fourth embodiment shown in FIGS. 4, a plate-like body 1 is fixed to installation portions 3 via vibration damping members 2, and the installation portions 3 are fixed to a wall 4. Vertical and horizontal intervals between the installation portions 3 are set at arbitrary values. By setting arbitrary vertical and horizontal intervals of the installation portions 3 and providing a plurality of sections enclosed by the installation portions 3 in the sound absorbing structure, a plurality of natural frequencies can be set for the plate-like body 1 that determines a sound absorption peak frequency. Therefore, a vibration damping performance in a wide frequency range can be improved. Two sides of one section of the plate-like body 1 enclosed by the installation portions 3 may have different dimensions. This can also contribute to an improvement in the sound absorbing coefficient in a wide frequency range.

### (e) Fifth Embodiment

In sound absorbing structures of a fifth embodiment shown in FIGS. 5, a plate-like body 1 has one surface thereof fixed to a wall 4 via installation portions 3 (unconstrained anti-vibration structure). In a structure of FIG. 5A, a vibration damping member 2 is further adhered to the other surface of the plate-like body 1. In a structure of FIG. 5B, vibration damping members 2 are adhered to surface sections of the plate-like body 1 between the installation portions 3 while being distanced from the installation portions 3. In a structure of FIG. 5C, vibration damping members 2 are adhered to the surface sections of the plate-like body 1 between the installation portions 3 while defining no clearances to the installation portions 3. In a structure of FIG. 5D, a vibration damping member 2 is adhered to the other surface of the plate-like body 1 and vibration damping members 2 are adhered to surface sections between the installation portions 3.

As described above, in this embodiment, the one surface of the plate-like body 1 is fixed to the wall 4 via the installation portions 3, and the vibration damping member(s) is/are adhered to the one or/and the other surfaces of the plate-like body 1. Thus, the vibration damping member(s) is/are also deformed as the plate-like body 1 vibrates and undergoes a deformation, whereby vibration energy is converted into a thermal energy, resulting in the attenuation of the vibration. Therefore, noise (aerial vibration) can be reduced. Further, by suitably setting the vibration damping property of a main body of the plate-like body 1, the sound absorbing performance can be improved in a wide frequency range. (f) Sixth Embodiment

In a sound absorbing structure of a sixth embodiment shown in FIG. 6, a plate-like body 1 has a vibration damping member 2 adhered to one surface thereof, and the vibration damping member 2 is fixed to a wall 4 via installation portions 3. By adhering the vibration damping member 2 to the one surface of the plate-like body 1 and fixing the vibration damping member 2 to the installation portions 3, the structure is allowed to realize both the vibration damping of a main body of the plate-like body 1 and the vibration damping caused to occur in a fixed portion. Therefore, the functions and effects of the embodiment of FIGS. 1 and those of FIGS. 5 can be simultaneously exhibited, wherefore the sound absorbing performance can be improved in an even wider frequency range.

### (g) Seventh Embodiment

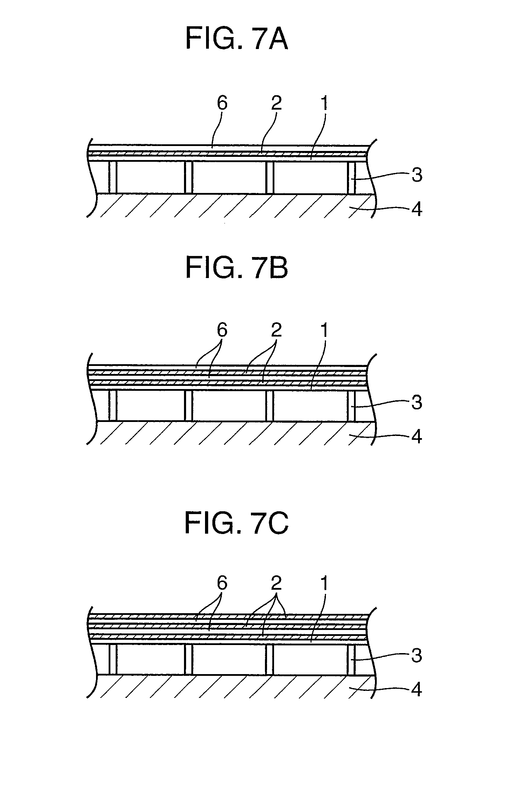

In sound absorbing structures of a seventh embodiment shown in FIGS. 7, a plate-like body 1 has one surface thereof fixed to a wall 4 via installation portions 3 and has a constraining plate 6 provided on the other surface thereof via a vibration damping member 2 (constrained anti-vibration structure) (FIG. 7A). By fixing the vibration damping member 2 and the constraining plate 6 to the one surface of the plate-like body 1 in this way, a high damping property can be exhibited similar to the anti-vibration structure of FIGS. 5. It should be noted that, in this sound absorbing structure, two layers of the vibration damping members 2 and the constraining plates 6 may be superimposed as shown in FIG. 7B or another vibration damping member 2 may be superimposed on the other surface of the constraining plate 6 as shown in FIG. 7C. The material of the constraining plate 6 is similar to that of the plate-like body 1. The embodiment of FIGS. 5 and that of FIGS. 7 are selectively used to desirably control a vibration damping property necessary to realize a specified sound absorbing coefficient. (h) Eighth Embodiment

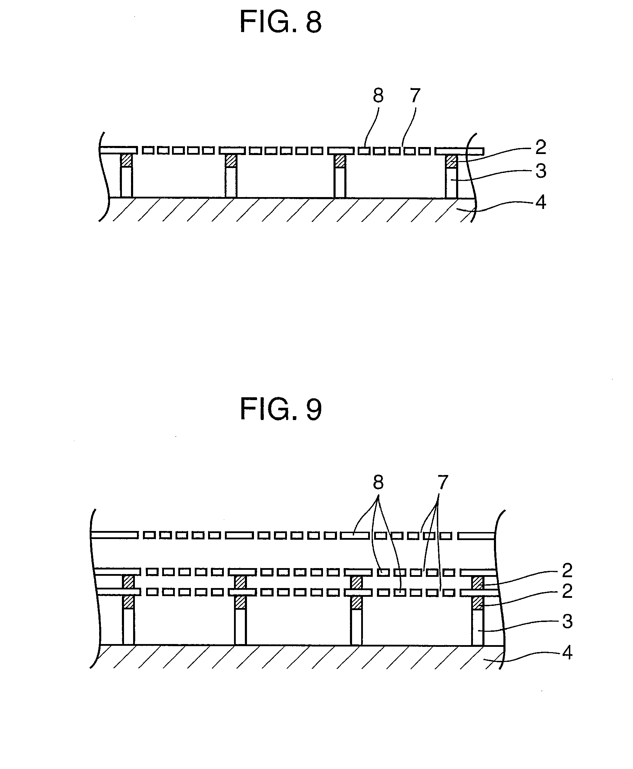

In a sound absorbing structure of a sixth embodiment shown in FIG. 8, a plate-like body 8 having a multitude of through holes (pores) 7 is used in place of the plate-like body 1 of the sound absorbing structure shown in FIG. 1. By providing the plate-like body 8 with the pores 7 in this way, the sound absorption given by a sound absorbing structure of the Helmholz type is realized in addition to the sound absorption by the plate vibration of the plate-like body 8 itself, wherefore a larger sound absorbing effect can be expected. Further, by adjusting the shape and size of the through holes 7 (e.g. forming the through holes 7 to have a pore diameter of 3 mm to 1 mm or 1 mm or smaller), a viscous effect of air passing through the through holes 7 can be added. Therefore, the sound absorption can be improved in an even wider range than in the embodiment of FIGS. 1.

### (i) Ninth Embodiment

In a sound absorbing structure of a ninth embodiment shown in FIG. 9, a plurality of layers of the vibration damping members 2 and the plate-like bodies 8 of the sound absorbing structure shown in FIG. 8 are superimposed. By providing a plurality of layers of the plate-like bodies 8 via the vibration damping members 2 in this way, a plurality of sound absorption peak frequencies by the through holes 7 can be set. Although the vibration damping members 2 are interposed between the plate-like bodies 8 in this embodiment, the vibration damping members 2 may be omitted. The positions of the through holes 7 of the plate-like bodies 8 may vertically overlap as shown in FIG. 9 or may not overlap.

### (j) Tenth Embodiment

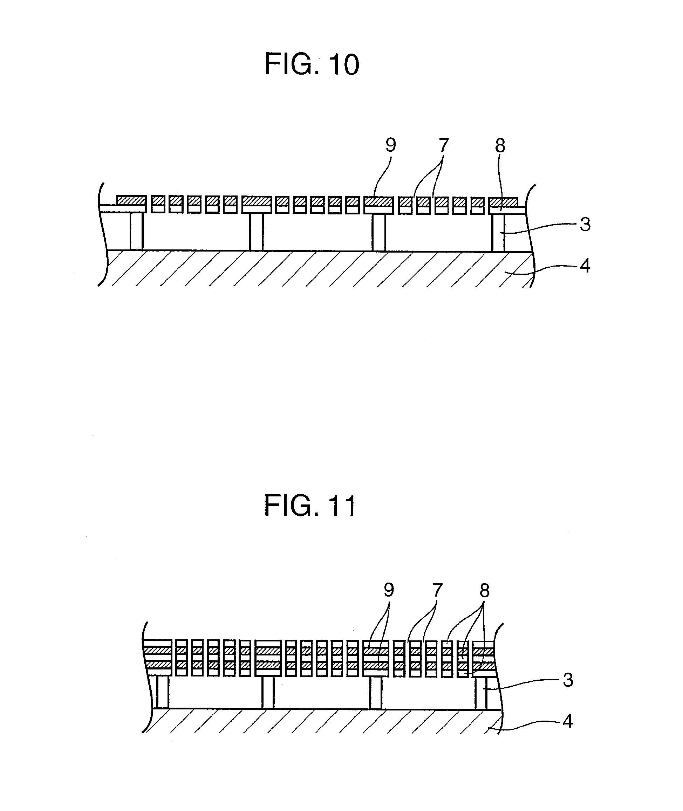

In a sound absorbing structure of a tenth embodiment shown in FIG. 10, a plate-like body 8 and a vibration damping member 9 having through holes 9 are used in place of the plate-like body 1 and the vibration damping member 2 shown in FIGS. 5. By providing the plate-like body 8 and the vibration damping member 9 with the through holes 7 in this way, the sound absorption given by a sound absorbing structure of the Helmholz type is realized in addition to the sound absorption by the plate vibration of the plate-like body 8 itself, wherefore a larger sound absorbing effect can be expected. Further, by adjusting the shape and size of the through holes 7 (e.g. forming the through holes 7 to have a pore diameter of 3 mm to 1 mm or 1 mm or smaller), a viscous effect of air passing through the through holes 7 can be added. Therefore, the sound absorption can be improved in an even wider frequency range than in the embodiment of FIGS. 5. This is also applicable to the embodiments shown in FIGS. 6 and 7. (k) Eleventh Embodiment

In a sound absorbing structure of an eleventh embodiment shown in FIG. 11, a plurality of layers of the plate-like bodies 8 and the vibration damping members 9 of the sound absorbing structure shown in FIG. 10 are superimposed. By providing a plurality of layers of the plate-like bodies 8 and the vibration damping members 9 in this way, a plurality of sound absorption peak frequencies by the through holes 7 can be set.

### (1) Twelfth Embodiment

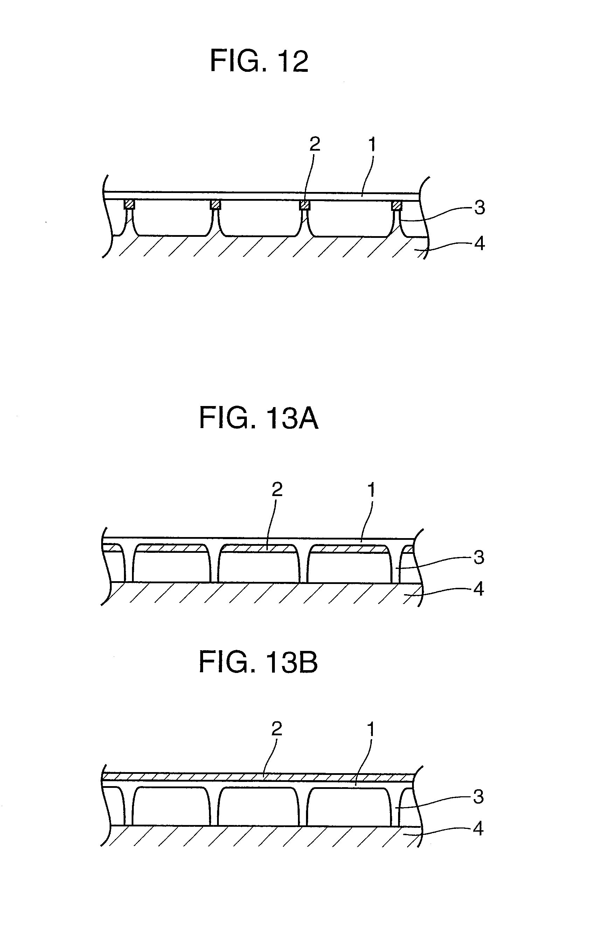

A sound absorbing structure of a twelfth embodiment shown in FIG. 12 is basically identical to the one shown in FIGS. 1 except that installation portions 3 and a wall 4 are integrally formed by, e.g. press-working. In such a sound absorbing structure as well, a vibration damping property is added to a plate-like body 1 by the same functions as in the case of the structure shown in FIGS. 1, whereby the sound absorbing performance can be improved in a wide frequency range.

### (m) Thirteenth Embodiment

Sound absorbing structures of a thirteenth embodiment shown in FIG. 13 are basically identical to those shown in FIGS. 5 except that a plate-like body 1 and installation portions 3 are integrally formed by, e.g. press-working. In such a sound absorbing structure as well, a vibration damping property is added to the plate-like body 1 by the same functions as in the case of the structures shown in FIGS. 5, whereby the sound absorbing performance can be improved in a wide frequency range. Although vibration damping members 2 are adhered to surface sections of the plate-like body 1 between the installation portions 3 in the structure of FIG. 13A and a vibration damping member 2 is adhered to an opposite surface of the plate-like body 1 against the installation portions 3 in the structure of FIG. 13B, it does not matter whether or not the vibration damping member(s) is/are adhered to the surface of the plate-like body 1 in conformity with a required damping characteristic.

Hereinafter, examples of the first to thirteenth embodiments (inventive examples of the embodiments of FIGS. 1 to 13) are described.

### Example 1

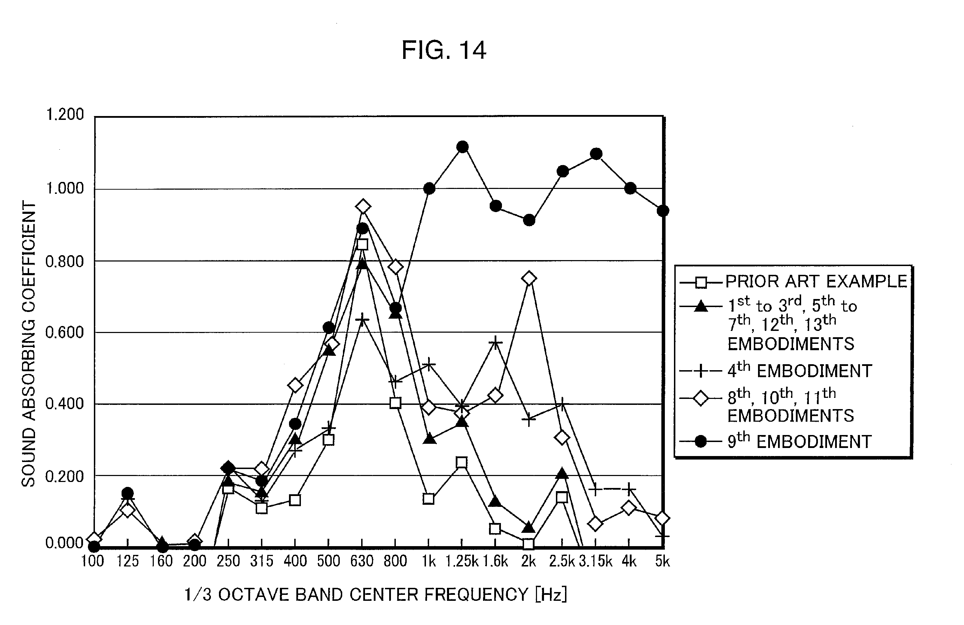

As is clear from FIG. 14, a conventional structure utilizing only the plate vibration has such a characteristic that the sound absorbing coefficient suddenly increases only at the natural frequency of a plate, and the sound absorbing coefficient is low in the other frequency range. Contrary to this, except the embodiments of FIGS. 4, 8 to 11, a frequency range where the sound absorbing coefficient is high can be widened in suitably set inventive examples of the embodiments of FIGS. 1 to 13.

In the case of the inventive examples of the embodiments of FIGS. 8, 10 and 11, the frequency range is enlarged and absolute values of the sound absorbing coefficients are increased by a sound absorption improving effect of adding the viscous effect of air passing through the through holes to the sound absorption characteristic at frequencies determined by the through holes and a background space in addition to by the sound absorption effect through the plate vibration adding the vibration damping property to the plate-like body.

Further, in the case of the inventive example of the embodiment of FIG. 4, a plurality of natural frequencies can be set by providing a plurality of sections enclosed by the installation portions 3 in the sound absorbing structure, whereby the sound absorbing coefficient is increased in a wide frequency range.

Furthermore, in the case of the inventive example of the embodiment of FIG. 9, a plurality of frequencies determined by the through holes and the background space can be set by superimposing a plurality of layers of the plate-like bodies formed with the through holes with air layers interposed therebetween, with the result that the sound absorbing coefficient is increased in a wider frequency range.

### Example 2

As is clear from FIG. 15, two frequencies appear as the natural frequencies of the plate vibration by setting different dimensions for two sides of one section of the plate-like body. Therefore, the sound absorbing characteristic can be improved in a wider frequency range than with the plate-like body, the two sides of the sections of which are equal.

### INDUSTRIAL APPLICABILITY

As described above, the present invention is effective for a sound absorbing structure for reducing sounds from a noise source having a wide frequency characteristic and particularly suitably applicable to inner walls of automotive vehicles and soundproof walls of bridges.

## Claims

1. A sound absorbing structure utilizing the vibration of a plate-like body, comprising:
the plate-like body;
a vibration damping member provided on at least one surface of the plate-like body; and
an installation portion provided at an opposite side of the vibration damping member against the plate-like body.

2. A sound absorbing structure utilizing the vibration of a plate-like body, comprising:
the plate-like body;
vibration damping members provided on the opposite surfaces of the plate-like body; and
an installation portion provided at an opposite side of at least one vibration damping member against the plate-like body.

3. A sound absorbing structure utilizing the vibration of a plate-like body, comprising:
the plate-like body;
an installation portion provided on at least one surface of the plate-like body; and
a vibration damping member provided on an opposite surface of the plate-like body against the installation portion and/or on the same surface of the plate-like body as the installation portion.

4. A sound absorbing structure utilizing the vibration of a plate-like body, comprising:
the plate-like body;
an installation portion provided on at least one surface of the plate-like body;
a vibration damping member provided on an opposite surface of the plate-like body against the installation portion; and
a constraining member provided at an opposite side of the vibration damping member against the plate-like body.

5. A sound absorbing structure according to any one of claims 1 to 4, wherein the vibration damping member is made of an elastic body or a viscoelastic body.

6. A sound absorbing structure according to any one of claims 1 to 4, wherein the vibration damping member is sheet-shaped.

7. A sound absorbing structure according to any one of claims 1 to 4, wherein the vibration damping member is line-shaped or strip-shaped.

8. A sound absorbing structure according to claim 1, wherein the vibration damping member is made of an elastic body or a viscoelastic body and is lattice-shaped.

9. A sound absorbing structure according to claim 2, wherein the vibration damping members are made of elastic bodies or viscoelastic bodies and at least one of the vibration damping members provided on the opposite surfaces of the plate-like body is lattice-shaped.

10. A sound absorbing structure according to claim 8, wherein the installation portion is lattice-shaped and has the same shape as the lattice-shaped vibration damping member.

11. A sound absorbing structure according to claim 8, wherein the lattice of the lattice-shaped vibration damping member includes a plurality of square and/or rectangular shapes having different sizes.

12. A sound absorbing structure according to claim 9, wherein the vibration damping members provided on the opposite surfaces of the plate-like body are lattice-shaped.

13. A sound absorbing structure according to claim 9, wherein the installation portion is lattice-shaped and has the same shape as the lattice-shaped vibration damping member.

14. A sound absorbing structure according to claim 9, wherein the lattice of the lattice-shaped vibration damping member includes a plurality of square and/or rectangular shapes having different sizes.

15. A sound absorbing structure according to any one of claims 1 to 4, wherein the plate-like body includes a plurality of through holes.

16. A sound absorbing structure according to claim 15, wherein the plate-like body and the vibration damping member include a plurality of through holes.

17. A sound absorbing structure according to any one of claims 1 to 4, wherein one or a plurality of other plate-like body(s) is/are arranged at an opposite side of the plate-like body against the installation portion.

18. A sound absorbing structure according to claim 17, wherein an elastic body or a viscoelastic body is arranged between the plurality of other plate-like bodies.

19. A sound absorbing structure according to claim 1 or 2, wherein the installation portion is another plate-like body provided with projections.

20. A sound absorbing structure according to claim 3 or 4, wherein the plate-like body and a plurality of installation portions are integrally formed, and the vibration damping members are arranged on the plate-like body between the plurality of installation portions.
